# EUROPÄISCHE PATENTSCHRIFT

(11) **EP 3 647 685 B1**
(45) Veröffentlichungstag und Bekanntmachung des Hinweises auf die Patenterteilung: **10.01.2024**
(21) Anmeldenummer: 19204634.0
(22) Anmeldetag: 22.10.2019
(51) Int. Cl.: F24F 11/36, F25B 25/00, F24F 110/65, F25B 29/00, F25B 41/24, F25B 41/20

(54) **VORRICHTUNG**
DEVICE
DISPOSITIF

(30) Priorität: 31.10.2018 DE 102018127232
(43) Veröffentlichungstag der Anmeldung: 06.05.2020
(73) Patentinhaber: Vaillant GmbH, 42859 Remscheid (DE)
(72) Erfinder: Lingk, Tobias, 42799 Leichlingen (DE); Spahn, Hans-Josef, 40699 Erkrath (DE)
(74) Vertreter: Popp, Carsten

(56) Entgegenhaltungen:
- DE-A1- 4 102 179
- DE-U1- 9 106 051
- DE-U1- 9 319 874

## Beschreibung

Die Erfindung betrifft Vorrichtungen gemäß dem Oberbegriff des Anspruchs 1. Sie betrifft irreguläre Zustände in Arbeitsfluidumlaufen, in denen ein als Kältemittel wirkendes Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden gebräuchlich sind. Unter Wohngebäuden werden dabei Privathäuser, Miethauskomplexe, Krankenhäuser, Hotelanlagen, Gastronomie, kombinierte Wohn- und Geschäftshäuser sowie Gewerbebetriebe verstanden, in denen Menschen dauerhaft leben und/oder arbeiten, im Unterschied zu mobilen Vorrichtungen wie KFZ-Klimaanlagen oder Transportboxen, oder auch freistehenden Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel die Ozonschicht schädigen, zur Klimaerwärmung führen, und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014.

Es ist daher einerseits äußerst problematisch, die konstruktiven Prinzipien für Kältemittel-führende thermodynamische Prozesse zu übernehmen, die sich bei Sicherheitskältemitteln scheinbar gut bewährt haben, andererseits auf die Anlagenkonzepte aus der Zeit vor Einführung der Sicherheitskältemittel aufzusetzen. Dies liegt auch daran, dass inzwischen aus Einzelgeräten komplexe Anlagen geworden sind, was die Anzahl der Möglichkeiten für Störungen und deren Folgen vervielfältigt hat. Hierdurch ergeben sich beispielhaft die folgenden Anforderungen an das Sicherheitskonzept:
- Im Normalbetrieb muss die Anlage absolut dicht sein.
- Weder bei einer Leckage im Kondensator noch bei einer Leckage im Verdampfer darf Arbeitsfluid in den gekoppelten Nutzwärme- oder Nutzkältekreislauf gelangen.
- Es darf kein Arbeitsfluid aus dem Kältekreislauf unbemerkt entweichen können.
- Im Verdichter darf das Arbeitsfluid nicht durch die Lagerung entweichen.
- Im Entspannungssystem darf das Arbeitsfluid nicht durch den Ventilsitz diffundieren oder durch Kavitation zu Leckagen führen.
- Gekapselte Teile müssen für Wartungs- und Kontrollzwecke zugänglich bleiben.
- In Notfällen dürfen sich keine Gefahren einstellen.
- Die Anlage soll in vorhandene Räumlichkeiten integrierbar sein
- Das Kältemittel soll abgelassen und eingefüllt werden können.

Der Begriff des Notfalls muss weit gesehen werden. Denkbar sind Stromausfälle, Erdbeben, Erdrutsche, Überschwemmungen, Brände, technische Fehler und klimatische Extrembedingungen. Sofern die Anlagen in einem Netzwerk betrieben werden, ist auch ein Netzausfall oder eine Netzstörung als Notfall anzusehen. Gegenüber solchen Gefahren oder Störungen soll die Vorrichtung inhärent sicher sein. Aber auch ein Ausfall der verfügbaren Primärenergie kann einen Notfall begründen und darf keine Gefahrentwicklung zur Folge haben. Alle diese Notfälle können auch kombiniert auftreten.

Hierbei sind die verschiedenen Bauformen und Anwendungsfälle für derartige thermodynamische Kreisprozesse gesondert zu berücksichtigen, bei ortsfesten Anlagen für Wohngebäude beispielsweise folgende:
- Haushaltskühlschränke,
- Haushaltsgefrierschränke,
- Haushaltstrockner,
- Haushaltskühl-Gefrierkombinationen,
- Kühlkammern für Hotel- und Gastronomie,
- Gefrierkammern für Hotel- und Gastronomie,
- Klimaanlage für Haus, Hotel- und Gastronomie,
- Warmwassererzeugung für Haus, Hotel- und Gastronomie,
- Beheizung für Haus, Hotel- und Gastronomie,
- Sauna-Schwimmbadanlagen für Haus, Hotel- und Gastronomie,
- Kombinierte Anlagen für die oben genannten Anwendungen,
wobei diese Aufzählung nicht vollständig ist.

Die Energie für den Betrieb der Anlagen einschließlich der zu verschiebenden Wärmeenergie kann aus verschiedenen Quellen stammen:
- Erdwärme aus Erdwärmespeichern,
- Geothermische Wärme,
- Fernwärme,
- Elektrische Energie aus allgemeiner Stromversorgung,
- Elektrische Solarenergie,
- Solarwärme,
- Umgebungswärme der Luft,
- Abwärme,
- Warmwasserspeicher,
- Eisspeicher,
- Latentwärmespeicher,
- Fossile Energieträger wie Erdgas, Erdöl, Kohle,
- Nachwachsende Rohstoffe wie Holz, Pellets, Biogas,
- Kombinationen aus den oben genannten Energiequellen,
wobei auch diese Aufzählung nicht vollständig ist.

Die auftretenden Probleme bei der Sicherheitsauslegung solcher Anlagen werden in der WO 2015/032905 A1 anschaulich beschrieben. So liegt die untere Zündgrenze von Propan als Arbeitsfluid etwa bei 1,7 Volumenprozent in Luft, was 38 g/m³ in Luft entspricht. Sofern der Kälteprozess in einem ihn umgebenden, hermetisch abgeschlossenen, ansonsten aber luftgefüllten Raum mit dem Arbeitsfluid Propan durchgeführt wird, stellt sich das Problem der Erkennung einer kritischen, explosiven Situation nach einer Störung, bei der das Arbeitsfluid in diesen hermetisch abgeschlossenen Raum austritt. Elektrische Sensoren zur Erkennung kritischer Konzentrationen sind nur schwierig explosionsgeschützt auszuführen, weswegen gerade die Propan-Erkennung durch die Sensoren selbst das Explosionsrisiko erheblich verschärft, ausgenommen hiervon sind Infrarotsensoren. Propan ist auch giftig, bei Inhalation oberhalb einer Konzentration von ca. 2 g/m³ stellen sich narkotische Effekte, Kopfschmerzen und Übelkeit ein. Dies betrifft Personen, die ein erkanntes Problem vor Ort lösen sollen, noch bevor Explosionsgefahr entsteht.

Propan ist auch schwerer als Luft, sinkt also in ruhender Luft auf den Boden und sammelt sich dort an. Sollte sich also ein Teil des Propans in einer strömungsarmen Zone des abgeschlossenen Raums, in dem sich das gestörte Aggregat befindet, sammeln, können die lokalen Explosionsgrenzen wesentlich schneller erreicht werden, als es der Quotient aus Gesamtraumvolumen zu ausgetretener Propanmenge erwarten lässt. Die WO 2015/032905 A1 sucht dieses Problem zu lösen, indem ein Generator für elektrischen Strom in die Öffnung bzw. deren Verriegelung dieses Raums integriert wird und bei deren Betätigung in einem ersten Schritt die elektrische Energie erzeugt und bereitstellt, mit der der Sensor aktiviert wird, und der im Alarmfall die Verriegelung dann nicht freigibt, sondern eine Lüftung des abgeschlossenen Raums veranlasst, und erst in einem zweiten Schritt eine Entriegelung und Öffnung zulässt.

Schon zu Beginn der Technologie der Kompressionskältemaschinen wurde der Versuch unternommen, einen abgeschlossenen Raum zu bilden, in dem die apparativen Ausrüstungen alle sicher untergebracht werden konnten und der diese vollständig umhüllt. Die DE-PS 553 295 beschreibt eine gekapselte Kompressionskältemaschine, bei der der Kältemittelverdichter 1, sein Antriebsmotor 2, Verdampfer 3, Verflüssiger 4 und Regelventil 5 in einer doppelwandigen Kapsel 6 bzw. 7 eingeschlossen sind. Im Zwischenraum der doppelwandigen Kapsel wird ein Unterdruck angelegt und Leckagen, die an den Durchbrüchen für Kühlwasser und Sole auftreten könnten, abgesaugt. Das abgesaugte Arbeitsfluid kann im Anschluss daran ggf. zurückgewonnen werden. Zu bemerken ist dabei, dass sich innerhalb des gekapselten Raums keine Umgebungsluft befindet und aufgrund des Unterdrucks im Doppelmantel auch nicht in den gekapselten Innenraum eindringen kann.

Die DE 41 14 529 A1 beschreibt eine Sicherheitseinrichtung für eine mit einem gefährlichen Medium gefüllte kältetechnische Anlage, die aus mindestens einem kompletten Kälteaggregat besteht, das einen Kältemittelkreislauf mit Verdampfer, Verdichter und Verflüssiger, sowie einen Antriebsmotor umfasst. Die Anlage ist gasdicht eingeschlossen, wobei die Umschließung nach dem im Störfall technisch möglichen Höchstdruck ausgelegt ist, und aus der Umschließung die Anschlüsse für den Kälteträger, ein Kühlmittel sowie elektrische Versorgungs-, Überwachungs- und Steuerleitungen druckdicht nach außen geführt sind. Es kann ein Ausgleichsbehälter angeschlossen sein.

Die DE 195 25 064 C1 beschreibt eine Kältemaschine mit einem gasdicht ausgebildeten Gehäuse, welches alle kältemittelführenden Komponenten der Maschine aufnimmt, ein das Innere des gasdichten Gehäuses mit einem Auslass verbindender Raum vorgesehen ist, und der Raum mit einem das Kältemittel sorbierenden Stoff gefüllt ist. Die Menge des sorbierenden Stoffes wird dabei so dimensioniert, dass die gesamte Menge an eventuell austretendem Kältemittel aufgenommen und von der Umwelt ferngehalten werden kann. Der mit dem sorbierenden Stoff gefüllte Raum ist zur Umgebung hin offen. Bei Kältemitteln, die schwerer als Luft sind, ist der Raum nach unten hin offen, bei solchen, die leichter sind, ist er nach oben hin offen, so dass ein Fördergebläse nicht erforderlich ist. Das Sorptionsmittel wird in das Gehäuse eingebracht und umschließt die Kältemaschine bzw. die kältemittelführenden Einrichtungen vollständig. Auf seinem Weg nach außen sind Schikanen vorgesehen, die Kurzschlussströmungen verhindern und entweichendes Gas durch das Sorptionsmittel zwingen. Auch eine doppelwandige Ausführungsform, bei der das Sorptionsmittel im Doppelmantel angeordnet ist, ist möglich. Am Ausgang des mit dem sorbierenden Stoff gefüllten Raumes zur Umgebung hin kann eine Messeinrichtung für Kältemittel vorgesehen werden.

Die DE 102011 116 863 A1 beschreibt ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert. Als Adsorptionsmittel werden Zeolith, auch in Kombination mit Imidazol oder Phosphaten, ferner CuBTC vorgeschlagen, das Adsorptionsmittel kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raums durchgeführt werden.

Die DE 195 26 980 A1 beschreibt eine Vorrichtung und ein Verfahren zur Reinigung von Luft geschlossener Räume, die eine gasförmige Verunreinigung aufweisen. Nachdem die Verunreinigung von einem Gassensor erkannt wurde, steuert dieser einen Verdichter an, der die Luft durch einen in diesem Raum befindlichen Absorber leitet, wodurch die Verunreinigung absorbiert wird. Die gereinigte Luft verlässt den Absorber in den geschlossenen Raum.

Die DE 195 25 064 C1 beschreibt eine Kältemaschine mit einem gasdicht ausgebildeten Gehäuse, welches alle kältemittelführenden Komponenten der Maschine aufnimmt, ein das Innere des gasdichten Gehäuses mit einem Auslass verbindender Raum vorgesehen ist, und der Raum mit einem das Kältemittel sorbierenden Stoff gefüllt ist. Die Menge des sorbierenden Stoffes wird dabei so dimensioniert, dass die gesamte Menge an eventuell austretendem Kältemittel aufgenommen und von der Umwelt ferngehalten werden kann. Der mit dem sorbierenden Stoff gefüllte Raum ist zur Umgebung hin offen. Bei Kältemitteln, die schwerer als Luft sind, ist der Raum nach unten hin offen, bei solchen, die leichter sind, ist er nach oben hin offen, so dass ein Fördergebläse nicht erforderlich ist. Das Sorptionsmittel wird in das Gehäuse eingebracht und umschließt die Kältemaschine bzw. die kältemittelführenden Einrichtungen vollständig. Auf seinem Weg nach außen sind Schikanen vorgesehen, die Kurzschlussströmungen verhindern und entweichendes Gas durch das Sorptionsmittel zwingen. Auch eine doppelwandige Ausführungsform, bei der das Sorptionsmittel im Doppelmantel angeordnet ist, ist möglich. Am Ausgang des mit dem sorbierenden Stoff gefüllten Raumes zur Umgebung hin kann eine Messeinrichtung für Kältemittel vorgesehen werden.

Die EP 1 666 287 beschreibt eine Fahrzeugklimaanlage mit einem Auffangbehälter für das Kältemittel, der über ein extern steuerbares Ventil mit einem Gas-Flüssigkeits-Trenner in Verbindung steht. Mittels einer Druckerfassungsvorrichtung kann das Ventil geschlossen werden, wenn der erfasste Druck gleich einem vorbestimmten Druck wird. Das Signal zum Öffnen des Ventils kann durch eine Leckageerkennung erfolgen.

Die EP 2 921 801 A1 beschreibt eine Methode zum Austausch von fluiddurchströmten Teilen einer Klima-Kälteanlage. Hierbei wird ein Behälter angeschlossen, in den das Arbeitsfluid aus dem Kältekreislauf hineinströmen kann, wobei ein Verbindungsteil und eine Druckreduzierung vorgesehen werden. Sobald der größte Teil des Kältekreislaufs in den Behälter geströmt ist, befindet sich nur so wenig entzündliches Arbeitsfluid in den von Arbeitsfluid üblicherweise durchströmten Teilen, dass das schadhafte Teil entfernt und durch ein Ersatzteil ersetzt werden kann, ohne dass bei dieser Arbeit auch bei Wärmezufuhr, z.B. durch Löten, eine Entzündungsgefahr besteht.

Die EP 660 055 A2 beschreibt eine Heizungs- und Kühlanlage mit einer integrierten Vollhermetik-Kältemaschine insbesondere zur Kühlung und Beheizung von Fahrzeugen aller Art. Dabei sind alle kältemittelführenden Teile und Aggregate in einem Druckbehälter untergebracht, hierdurch wird auch im Falle durch Beschädigungen bei Unfällen ein Austritt des Kältemittels sicher verhindert. Innerhalb des Kältekreises ist ein Magnet-Absperrventil stromabwärts des Verflüssigers vorgesehen, welches den Kältekreis notfalls unterbrechen könnte. Der Kompressor ist ebenfalls mit Absperrhähnen vom Kältekreis abtrennbar, nicht jedoch ohne den Druckbehälter zuvor zu öffnen. Eine Möglichkeit, das Kältemittel im Störfall gezielt einzusperren, wird jedoch nicht vorgesehen, da in einem solchen Fall der gesamte Druckbehälter durch die Kfz-Werkstatt ausgetauscht werden soll und der Druckbehälter vor seiner späteren Öffnung erst evakuiert wird.

Auch die DE 91 06 051 U beschreibt eine vollhermetisch gekapselte Kältemaschine in zwei Ausführungen, einer kleinen Anlage und einer Großanlage. Innerhalb des gekapselten Gehäuses befinden sich alle kältemittelführenden Einrichtungen, darunter ist auch ein Sammelbehälter für Kältemittel abströmseitig des Verflüssigers. Absperrventile innerhalb des Kältemittelkreislaufes sind entbehrlich, weil im Falle einer Störung der gesamte Inhalt des gekapselten Bereichs evakuiert wird. Bei Großanlagen wird außerhalb des Kältekreises eine eigene Kältemittelentsorgungseinheit angeschlossen.

Sowohl die DE 91 06 051 U als auch die EP 660 055 A2 legen die Druckstabilität der hermetischen Vollkapselung entsprechend dem Dampfdruck des austretenden Kältemittels aus. Entzündliche Kältemittel können beim Entzünden jedoch zu erheblich höheren Drücken führen und sie könnten dabei auch die im Kapselbehälter eingeschlossenen Wärmetauscher zerstören mit der Folge, dass ein Austritt über die angeschlossenen Wärmeträgerkreisläufe möglich wird. Hiergegen schlagen die beiden Patentdokumente keine technische Lehre vor. Beide Patentdokumente offenbaren eine Vorrichtung gemäß dem Oberbegriff des Anspruchs 1.

Die EP 3 115 714 A1 beschreibt die Problematik eines Ablasses des Arbeitsfluids durch eine großlumige Rohrleitung, die am Auslass der Wärmequellenseite des Kondensators angeschlossen ist. Hierbei sammelt sich Arbeitsfluid nicht nur während des Ablassens, sondern auch während des normalen Kühlbetriebs, und dadurch sinkt auch die Kühlleistung. Würde man dem Effekt durch eine größere Menge an Arbeitsfluid entgegensteuern, stiegen die Herstellungskosten und auch die Risiken bei Leckagen. Das Problem wird gelöst durch einen Lagerbehälter, ein erstes Auf/Zu-Ventil in einer Leitung zwischen der Entspannungsventil und der Nutzseite des Wärmetauschers und einen Bypass, der zwischen dem Auf/Zu-Ventil und dem Entspannungsventil abzweigt und mit der Saugseite des Verdichters verbunden ist. Beim Ablassen von Arbeitsfluid in den Behälter wird das erste Auf/Zu-Ventil geschlossen und das Arbeitsfluid strömt von der Wärmequellenseite durch den Bypass in den Lagerbehälter.

Die vorgestellten Systeme hatten am Markt bislang nur wenig Erfolg. Dies kann auf die folgenden Gründe zurückgeführt werden:
- Montagefreundlichkeit: Im Falle von Modernisierungen von alten Heizungsanlagen müssen die neu zu installierenden Vorrichtungen zerlegbar und transportabel sein. Beispielsweise müssen sie über Kellertreppen und in verwinkelte und niedrige Kellerräume verbracht werden können. Zusammenbau, Inbetriebnahme und Wartung müssen ohne gro-ßen Aufwand vor Ort möglich sein. Dies schließt große und schwere Druckbehälter weitgehend aus, ferner Systeme, die nach einer Havarie nicht mehr demontierbar sind.
- Diagnosefreundlichkeit: Die Betriebszustände sollten von außen gut erkennbar sein, dies betrifft die Sichtbarkeit und Prüfbarkeit bezüglich möglicher Leckagen und schließt den Füllstand des Arbeitsfluids sowie den Befüllungsgrad ggf. eingebrachter Sorbenzien ein.
- Wartungsfreundlichkeit: Systemdiagnosen sollten ohne großen zusätzlichen Aufwand erfolgen können. Sicherheitsrelevante Systeme sollten regelmäßig getestet bzw. auf ihre Zuverlässigkeit geprüft werden können. Sofern Systemdiagnosen nicht einfach durchführbar sind, sollten möglicherweise belastete Teile leicht durch Neuteile austauschbar sein.
- Ausfallsicherheit: Die Systeme sollen einerseits gegen Störungen gesichert sein, gleichzeitig aber zuverlässig laufen können, wenigstens im Notbetrieb. Im Falle einer vorübergehenden externen Störung sollten die Systeme entweder selbstständig wieder anfahren oder ohne großen Aufwand wiederangefahren werden können.
- Energieeffizienz: Die Anlagen sollen energetisch günstig betrieben werden können, ein hoher Eigenverbrauch an Energie für Sicherheitsmaßnahmen wirkt dem entgegen.
- Robustheit: Im Falle größerer Störungen, seien sie extern oder systemintern aufgeprägt, muss die Beherrschbarkeit gewährleistet sein, dies betrifft z.B. Lüftungssysteme, die verstopfen können oder Druckbehälter, die unter Druck stehen oder heiß werden, etwa bei einem Brand.
- Kosten: Die Sicherheitsmaßnahmen sollen weder bei den Anschaffungskosten noch bei den laufenden Kosten bedeutend sein und die Einsparungen bei den Energiekosten gegenüber herkömmlichen Systemen übersteigen. Sie sollen günstig sein.

Im Falle von Leckagen oder Wartungsarbeiten, bei denen der Arbeitsfluidumlauflauf geöffnet oder erhitzt werden muss, ist der Arbeitsfluidumlauf möglichst vollständig zu entleeren oder wenigstens vom entzündlichen Arbeitsfluid so weitgehend zu befreien, dass nie die Gefahr einer Entzündung entstehen kann. Auch sonstige Maßnahmen, wie z.B. Routineprüfungen, können eine Entleerung erfordern. Solche Entleerungen werden derzeit manuell durchgeführt. Wünschenswert angesichts extern verursachter Störungen wie Erdbeben, Bränden oder Überschwemmungen wäre ferner, wenn das entzündliche Arbeitsfluid schnell automatisch in Sicherheit gebracht werden könnte.

Die Aufgabe der Erfindung ist daher, ein verbessertes Sicherheitssystem bereitzustellen, welches leckagebedingt austretendes Arbeitsfluid derart begrenzt, dass es unschädlich bleibt.

Die Erfindung löst diese Aufgabe durch eine Vorrichtung gemäß Anspruch 1.

Als Wärmeübertragerfluide sind hier alle gasförmigen oder flüssigen Medien zu verstehen, mit denen Wärme übertragen wird, also etwa Luft, Wasser, Sole, Wärmeträgeröle oder dergleichen.

Als nichtregulärer Betrieb sind Wartungen, Stilllegungen, längere Abschaltungen, Störfälle und der Transport der Vorrichtung umfasst.

Der im Gehäuse eingebaute Arbeitsfluidumlauf wird dabei sektionsweise mit einigen Differenzdruck- dichtschließenden Kältekreisventilen ausgestattet, welche jeweils Baugruppen bilden können, und im Folgenden der Einfachheit halber als Zonenventile bezeichnet werden. Die Position der Zonenventile im Kältekreis ist idealerweise dabei so auszulegen, dass im Falle einer detektierten Kältemittelleckage oder im Standby des Kältekreises, der beispielsweise eine Wärmepumpe bildet, die Zonenventile schließen und dabei eine größtmögliche Kältemittelmenge vor einen Austritt in die Umgebung bewahren.

In Ausgestaltungen der Erfindung ist vorgesehen, dass
- die Zonenventile der Zonenventil-Baugruppen mit steuerbaren Antrieben ausgestattet sind,
- die Zonenventile der Zonenventil-Baugruppen elektrisch oder elektrisch/ pneumatisch schaltbar sind,
- die Zonenventile der Zonenventil-Baugruppen thermisch oder thermoelektrisch schaltbar sind,
- die Zonenventile der Zonenventil-Baugruppen einmalig mittels Sprengkapsel aktiviert werden,
- die Zonenventile der Zonenventil-Baugruppen aus geflanschten Doppelabsperrventilen gebildet werden, die im geschlossenen Zustand zusammen mit der abgesperrten Baugruppe abgelöst und demontiert werden können.

Die Schaltbarkeit mittels Sprengkapsel entspricht dabei der bei KFZ-Airbags verwendeten Technologie.

In Ausgestaltungen wird vorgesehen, dass der Verdichter durch zwei Zonenventil-Baugruppen und die Wärmeübertrager durch jeweils zwei Zonenventil-Baugruppen abgesperrt werden. Weiterhin kann ein Sammelbehälter vorgesehen werden, der mit einer eigenen Zonenventil-Baugruppe abgesperrt wird. Der Sammelbehälter sollte abströmseitig zum Kondensator-Wärmeübertrager eingebunden werden, wobei die Zonenventil-Baugruppe, die den Kondensatorwärmeübertrager absperrt, abströmseitig oder zuströmseitig zum Abzweig des Sammelbehälters vorgenommen werden kann.

Die Verwendung von geflanschten Doppelabsperrarmaturen mit einem dazwischen angeordneten Dreiwegeventil mit einem durch ein weiteres Ventil gesicherten Arbeitsfluidablass hat den Vorteil, dass jeweils die komplette, abgesperrten Baugruppe abgelöst und demontiert werden kann und dass es über den Arbeitsfluidablass möglich ist, zuvor einen großen Teil des in dieser Baugruppe enthaltenen Arbeitsfluids manuell abgeführt werden kann. Eine solche Abführung von Arbeitsfluid kann entweder in einen Sammelbehälter oder über einen Schlauch ins Freie erfolgen, letzteres sofern es sich um relativ kleine Mengen von nicht klimaschädlichem Arbeitsfluid handelt.

Bei Verwendung sogenannter NC-Ventile (Normal geschlossen) sollte eine Leckageüberwachung während des "Stand-by/Transportmodus" nicht erforderlich sein, da die Ventile die jeweiligen Arbeitsfluid-enthaltenden Abschnitte abschalten, entweder wenn die Ventile nicht von der Steuerung angesteuert werden oder die Kältekreismaschine, z.B. Wärmepumpe, vom Netz getrennt ist. Dies würde auch den Transport- und Montagefall abdecken, da im Falle eines Leckageereignisses nicht die gesamte Kältemittelmenge aus dem geschlossenen Bereich entweichen kann.

Das störfallbedingte Schließen der Zonenventile bedingt allerdings eine intrinsische bzw. extrinsische Leckageerkennungsfunktion, welche das Schließen der Zonenventile veranlasst.

Die Erfindung wird nachfolgend anhand zweier Skizzen näher erläutert. Hierbei zeigen:
Fig. 1 einen Arbeitsfluidumlauf einer Wärmepumpe,
Fig. 2 eine Zonenventil-Baugruppe,
wobei sich die Erfindung aber nicht auf die beispielhaft dargestellten Skizzen beschränkt. Dargestellt sind nur die wichtigsten Absperrorgane, selbstverständlich wird der Fachmann weitere Absperreinrichtungen und Rückschlagsicherungen vorsehen.

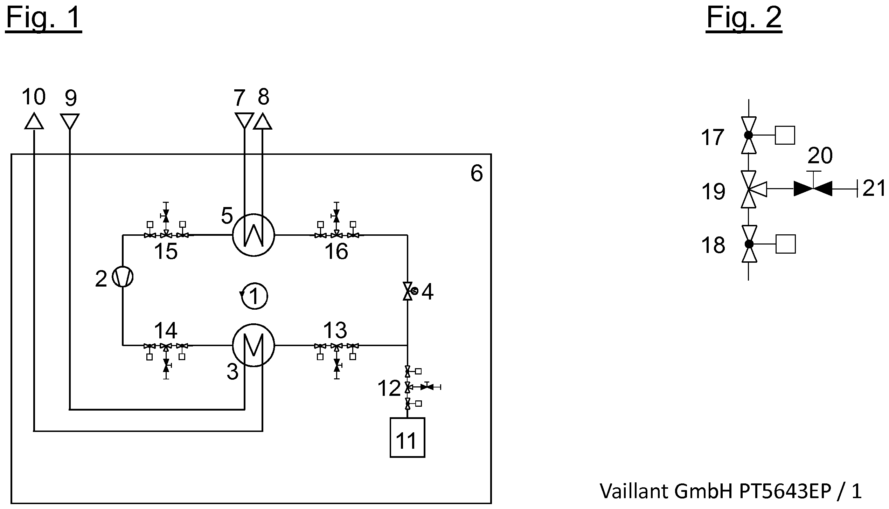

Fig. 1 zeigt eine Prinzipskizze einer Wärmepumpe mit einem Arbeitsfluidumlauf 1, einem Verdichter 2, einem Kondensator 3, einer Druckreduzierung 4 und einem Verdampfer 5 in einem geschlossenen Gehäuse 6. Das Gehäuse 6 verfügt über einen Wärmequellen-Anschluss 7, einen Wärmequellen-Vorlauf 8, einen Wärmesenken-Vorlauf 9 und einen Wärmesenken-Anschluss 10. Im Gehäuse befindet sich ferner ein Ausgleichsbehälter 11, der an den Arbeitsfluidumlauf angeschlossen ist. Der Arbeitsfluidumlauf 1 wird in diesem Beispiel mit dem entzündlichen Arbeitsfluid Propan, welches auch unter der Bezeichnung R290 bekannt ist, betrieben.

Der Arbeitsfluidumlauf wird hierfür in fünf Sektionen unterteilt:
- Die Zonenventil-Baugruppe 12 teilt den Ausgleichsbehälter 11 vom Arbeitsfluidumlauf ab,
- die Zonenventil-Baugruppen 13 und 14 teilen den Kondensator 3 vom Arbeitsfluidumlauf ab,
- die Zonenventil-Baugruppen 14 und 15 teilen den Verdichter 2 vom Arbeitsfluidumlauf ab,
- die Zonenventil-Baugruppen 15 und 16 teilen den Verdampfer 5 vom Arbeitsfluidumlauf ab,
- die Zonenventil-Baugruppen 12, 13 und 16 teilen das Expansionsventil 4 vom Arbeitsfluidumlauf ab.

Im vorliegend Beispiel können alle 5 Sektionen separat vom Arbeitsumlauf abgetrennt werden, außerdem ist es für jede der Sektionen möglich, das in der Sektion befindliche Arbeitsfluid abzulassen.

Fig. 2 zeigt die Zonenventil-Baugruppe 12, 13, 14, 15, 16 detaillierter, wobei die Erfindung aber nicht vorsieht, dass die Zonenventil-Baugruppen in allen Fällen identisch sein müssen oder sollen. Hierbei sind die Ventile 17 und 18 als automatische Schnellschlussventile ausgeführt, die entweder auf ein Signal hin oder bei Stromausfall sofort alle gasdicht schlie-ßen. Nachfolgend kann manuell eine Ablassmöglichkeit am Ablass 21 angeschlossen werden, worauf das Ablassventil 20 manuell geöffnet wird. Danach kann der dritte Weg des Dreiwegeventils 19 geöffnet werden, der im Normalbetrieb immer geschlossen ist. Dadurch, dass der dritte Weg sonst immer geschlossen ist, ergibt sich im Regelfall eine Doppelabsperrarmatur gegenüber dem Außenraum bzw. dem Ablass 21 im Gehäuse 6.

Durch die Öffnung der beiden Ventile kann der Totraum zwischen den Schnellschlussventilen 17 und 18 entlüftet werden. Sofern Arbeitsfluid aus einer der angrenzenden Sektionen abgelassen werden soll, kann das jeweilige Schnellschlussventil 17 oder 18 wieder geöffnet werden und das Arbeitsfluid kann über den Ablass 21 abgelassen werden. Sofern das Dreiwegeventil als Flanschventil ausgeführt ist, können die Schnellschlussventile gelöst werden und die betreffende Sektion kann mit Arbeitsfluid oder ohne oder mit Resten von Arbeitsfluid komplett entfernt werden.

### Bezugszeichenliste

- 1: Arbeitsfluidumlauf
- 2: Verdichter
- 3: Kondensator
- 4: Druckreduzierung
- 5: Verdampfer
- 6: Gehäuse
- 7: Wärmequellen-Anschluss
- 8: Wärmequellen-Vorlauf
- 9: Wärmesenken-Vorlauf
- 10: Wärmesenken-Anschluss
- 11: Ausgleichsbehälter
- 12: Zonenventil-Baugruppe
- 13: Zonenventil-Baugruppe
- 14: Zonenventil-Baugruppe
- 15: Zonenventil-Baugruppe
- 16: Zonenventil-Baugruppe
- 17: Schnellschlussventil
- 18: Schnellschlussventil
- 19: Dreiwegeventil
- 20: Ablassventil
- 21: Ablass

## Patentansprüche

1. Vorrichtung zur sicheren Durchführung eines linksdrehenden thermodynamischen Clausius-Rankine-Kreisprozesses sowie seiner sicheren Entleerung und Befüllung mittels eines entzündlichen Arbeitsfluids, welches im gasförmigen Zustand unter Atmosphärenbedingungen schwerer als Luft ist und in einem geschlossenen, hermetisch dichten Arbeitsfluidumlauf (1) geführt wird, aufweisend
- mindestens einen Verdichter (2) für Arbeitsfluid,
- mindestens eine Entspannungseinrichtung (4) für Arbeitsfluid,
- mindestens zwei Wärmeübertrager (3, 5) für Arbeitsfluid mit jeweils mindestens zwei Anschlüssen (7, 8, 9, 10) für Wärmeüberträgerfluide,
- ein geschlossenes Gehäuse (6),
- welches alle am geschlossenen Arbeitsfluidumlauf (1) angeschlossenen Einrichtungen umfasst,
- weitere Einrichtungen umfassen kann,
- eine Einrichtung zur Detektion von Leckagen,
**gekennzeichnet durch, dass**
- die Vorrichtung eine Vielzahl von auslösbaren Zonenventil-Baugruppen (12, 13, 14, 15, 16) aufweist, mit denen das Arbeitsfluid im nichtregulären Betrieb abschnittsweise im Arbeitsfluidumlauf eingesperrt wird,
- jede der auslösbaren Zonenventil-Baugruppen (12, 13, 14, 15, 16) aus je einem Dreiwege-Ventil (19), einem Ablassventil (20), und zwei automatischen Schnellschlussventilen (17, 18) gebildet ist, die an die drei Wege des Dreiwegeventils (19) angeschlossen sind.

2. Vorrichtung nach Anspruch 1, **dadurch gekennzeichnet, dass** die Zonenventil-Baugruppen (12, 13, 14, 15, 16) aus Differenzdruck-dichtschließenden Kältekreisventilen gebildet werden.

3. Vorrichtung nach Anspruch 1, **dadurch gekennzeichnet, dass** die Zonenventile der Zonenventil-Baugruppen (12, 13, 14, 15, 16) mit steuerbaren Antrieben ausgestattet sind.

4. Vorrichtung nach Anspruch 1, **dadurch gekennzeichnet, dass** die Zonenventile der Zonenventil-Baugruppen (12, 13, 14, 15, 16) elektrisch oder elektrisch/ pneumatisch schaltbar sind.

5. Vorrichtung nach Anspruch 1, **dadurch gekennzeichnet, dass** die Zonenventile der Zonenventil-Baugruppen (12, 13, 14, 15, 16) thermisch oder thermoelektrisch schaltbar sind,

6. Vorrichtung nach Anspruch 1, **dadurch gekennzeichnet, dass** die Zonenventile der Zonenventil-Baugruppen (12, 13, 14, 15, 16) einmalig mittels Sprengkapsel aktiviert werden.

7. Vorrichtung nach Anspruch 1, **dadurch gekennzeichnet, dass** die Zonenventile der Zonenventil-Baugruppen (12, 13, 14, 15, 16) aus geflanschten Doppelabsperrventilen (17, 18) gebildet werden, die im geschlossenen Zustand zusammen mit der abgesperrten Baugruppe abgelöst und demontiert werden können.

8. Vorrichtung nach einem der Ansprüche 1 bis 9, **dadurch gekennzeichnet, dass** der Verdichter (2) durch zwei Zonenventil-Baugruppen (14, 15), und die Wärmeübertrager (3, 5) durch jeweils zwei Zonenventil-Baugruppen (13, 14, 15, 16) abgesperrt werden.

9. Vorrichtung nach einem der Ansprüche 1 bis 10, **dadurch gekennzeichnet, dass** ein Sammelbehälter (11) vorgesehen wird, der mit einer eigenen Zonenventil-Baugruppe (12) abgesperrt wird.

## Claims

1. Device for safely performing an anti-clockwise thermodynamic Clausius-Rankine cycle, as well as its safe emptying and filling by means of a flammable working fluid, which is heaver than air in a gaseous state under atmospheric conditions and is conducted in a closed, hermetically sealed working fluid circuit (1), having
- at least one compressor (2) for working fluid,
- at least one expansion device (4) for working fluid,
- at least two heat exchangers (3, 5) for working fluid, each having at least two connections (7, 8, 9, 10) for heat transfer fluids,
- a closed housing (6),
- which comprises all the apparatuses connected to the closed working fluid circuit (1),
- may comprise further apparatuses,
- an apparatus for detecting leaks,
**characterised in that**
- the device has a plurality of triggerable zone valve assemblies (12, 13, 14, 15, 16), by means of which the working fluid is confined in sections within the working fluid circuit in non-regular operation,
- each of the triggerable zone valve assemblies (12, 13, 14, 15, 16) is formed of a three-way valve (19), a discharge valve (20), and two automatic quick-closing valves (17, 18), which are connected to the three ports of the three-way valve (19).

2. Device according to claim 1, **characterised in that** the zone valve assemblies (12, 13, 14, 15, 16) are formed of differential pressure sealing refrigerant circuit valves.

3. Device according to claim 1, **characterised in that** the zone valves of the zone valve assemblies (12, 13, 14, 15, 16) are equipped with controllable drives.

4. Device according to claim 1, **characterised in that** the zone valves of the zone valve assemblies (12, 13, 14, 15, 16) can be switched electrically or electrically/pneumatically.

5. Device according to claim 1, **characterised in that** the zone valves of the zone valve assemblies (12, 13, 14, 15, 16) can be switched thermally or thermoelectrically.

6. Device according to claim 1, **characterised in that** the zone valves of the zone valve assemblies (12, 13, 14, 15, 16) are activated once by means of an explosive capsule.

7. Device according to claim 1, **characterised in that** the zone valves of the zone valve assemblies (12, 13, 14, 15, 16) are formed of flanged double shut-off valves (17, 18), which, in a closed state, can be removed and dismantled together with the shut off assembly.

8. Device according to any one of claims 1 to 9, **characterised in that** the compressor (2) is shut off by two zone valve assemblies (14, 15), and the heat exchangers (3, 5) are each shut off by two zone valve assemblies (13, 14, 15, 16).

9. Device according to any one of claims 1 to 10, **characterised in that** a collecting tank (11) is provided, which is shut off with its own zone valve assembly (12).

## Revendications

1. Dispositif destiné à la réalisation sans danger d'un processus à cycle de Clausius et Rankine thermodynamique orienté à gauche ainsi que sa vidange et son remplissage sans danger au moyen d'un fluide de travail inflammable, lequel à l'état gazeux dans des conditions atmosphériques est plus lourd que l'air et mené dans une circulation de fluide de travail (1) fermée et hermétiquement étanche, présentant
- au moins un compresseur (2) pour un fluide de travail,
- au moins un équipement de détente (4) pour un fluide de travail,
- au moins deux échangeurs de chaleur (3, 5) pour un fluide de travail avec respectivement au moins deux raccords (7, 8, 9, 10) pour des fluides d'échangeur de chaleur,
- un boîtier fermé (6),
- qui comprend tous les équipements raccordés à la circulation de fluide de travail (1) fermée,
- peut comprendre d'autres équipements,
- un équipement pour la détection de fuites,
**caractérisé en ce que**
- le dispositif présente une pluralité d'assemblages de vannes de zone (12, 13, 14, 15, 16) déclenchables avec lesquels le fluide de travail est emprisonné dans la circulation de fluide de travail par sections lors d'un fonctionnement irrégulier,
- chacun des assemblages de vannes de zone (12, 13, 14, 15, 16) déclenchables est formé d'une vanne trois voies (19), d'une vanne de vidange (20) et de deux vannes à fermeture rapide (17, 18) automatiques qui sont raccordées aux trois voies de la vanne trois voies (19).

2. Dispositif selon la revendication 1, **caractérisé en ce que** les assemblages de vannes de zone (12, 13, 14, 15, 16) sont formés de vannes de circuit de refroidissement étanches à la fermeture et à la pression différentielle.

3. Dispositif selon la revendication 1, **caractérisé en ce que** les vannes de zone des assemblages de vannes de zone (12, 13, 14, 15, 16) sont équipées d'entraînements pouvant être commandés.

4. Dispositif selon la revendication 1, **caractérisé en ce que** les vannes de zone des assemblages de vannes de zone (12, 13, 14, 15, 16) sont commutables électriquement ou électriquement/pneumatiquement.

5. Dispositif selon la revendication 1, **caractérisé en ce que** les vannes de zone des assemblages de vannes de zone (12, 13, 14, 15, 16) sont commutables thermiquement ou thermoélectriquement.

6. Dispositif selon la revendication 1, **caractérisé en ce que** les vannes de zone des assemblages de vannes de zone (12, 13, 14, 15, 16) sont activés une seule fois au moyen de détonateurs.

7. Dispositif selon la revendication 1, **caractérisé en ce que** les vannes de zone des assemblages de vannes de zone (12, 13, 14, 15, 16) sont formés de doubles vannes d'arrêt (17, 18) bridées qui peuvent être détachées et démontées à l'état fermé conjointement avec l'assemblage verrouillé.

8. Dispositif selon l'une quelconque des revendications 1 à 9, **caractérisé en ce que** le compresseur (2) est verrouillé par le biais de deux assemblages de vannes de zone (14, 15) et les échangeurs thermiques (3, 5) sont verrouillés par le biais de respectivement deux assemblages de vannes de zone (13, 14, 15, 16).

9. Dispositif selon l'une quelconque des revendications 1 à 10, **caractérisé en ce qu'**un récipient collecteur (11) est prévu, qui est verrouillé avec son propre assemblage de vannes de zone (12).
